# EUROPEAN PATENT APPLICATION

(11) **EP 4 354 434 A1**
(43) Date of publication of application: **17.04.2024**
(21) Application number: 22820577.9
(22) Date of filing: 09.06.2022
(51) Int. Cl.: G11B 27/02, G11B 20/10, G10L 25/30

(54) **AUDIO QUALITY CONVERSION DEVICE AND CONTROL METHOD THEREFOR**

(30) Priority: 09.06.2021 KR 20210075087
(71) Applicant: Cochl Inc, Dover, DE 19901 (US)
(72) Inventor: HAN, Yoon Chang, Seoul 06001 (KR); LEE, Su Bin, Seoul 06547 (KR); PARK, Jeong Soo, Suwon-si, Gyeonggi-do 16225 (KR); JEONG, Il Young, Seoul 05586 (KR); LEE, Don Moon, Suwon-si Gyeonggi-do 16240 (KR); LIM, Hyun Gui, Seoul 06092 (KR)
(74) Representative: Rückerl, Florian
(86) International application number: PCT/KR2022/008132
(87) International publication number: WO 2022/260450

(57) **Abstract**

An audio quality conversion device according to the present invention comprises: a control unit having, mounted therein, an artificial neural network that learns using a plurality of pieces of audio data recorded in recording environments differing with respect to a predetermined audio event, and environmental data related to the recording environments corresponding to respective audio data; and an audio input unit receiving outside sounds to generate audio recording data, wherein the control unit converts, on the basis of a learning result of the artificial neural network, the audio recording data generated by means of the audio input unit.

## Description

### [Technical Field]

The present invention relates to a device for correcting quality of audio data and a method of controlling the same. In detail, the present invention relates to a device for improving sound quality of audio data and a method of controlling the same.

### [Background Art]

In recent years, artificial intelligence technologies such as deep learning have been applied to process audio. An audio identification technology that is one of processing technologies related to audio has been developed to identify from which subject audio input is generated or in which situation the audio input occurs in the corresponding subject.

In this way, in order to implement the audio identification technology using artificial intelligence, a plurality of audio inputs, audio information that has already been identified to correspond thereto, and audio analysis are essential elements.

Meanwhile, with development of video platforms such as YouTube, efforts to improve audio quality using an audio analysis technology are ongoing. Content uploaded to a video platform is generally recorded on low-performance audio equipment, and thus the need to improve the audio quality is gradually increasing.

### [Disclosure]

### [Technical Problem]

The present invention is directed to providing an audio quality conversion device capable of converting recorded audio data using a pre-learned artificial intelligence model, and a method of controlling the same.

The present invention is also directed to providing an audio quality conversion device capable of converting audio data obtained through recording in a first environment as if the audio data were obtained through recording in a second environment, and a method of controlling the same.

The present invention is also directed to providing an artificial intelligence model that performs audio quality conversion to output audio data having similar quality to that of high-performance recording equipment even while low-performance recording equipment is used.

The present invention is also directed to providing a learning method for an artificial intelligence model for performing audio conversion.

### [Technical Solution]

One aspect of the present invention provides an audio quality conversion device including a controller equipped with an artificial neural network that performs learning using a plurality of pieces of audio data obtained by recording a predetermined audio event in different recording environments and environmental data related to the recording environments corresponding to the audio data, and an audio input unit that receives external sound and generates audio recording data, wherein the controller converts the audio recording data generated by the audio input unit on the basis of a result of the learning by the artificial neural network.

### [Advantageous Effects]

According to the present invention, there is an advantage in that sound quality of recorded audio data may be converted to suit various environments without being limited by performance of recording equipment.

### [Description of Drawings]

FIG. 1 is a block diagram illustrating components of an audio conversion device (100) according to an embodiment of the present invention.
FIG. 2 is a conceptual view illustrating an artificial neural network according to an embodiment of the present invention.

### [Modes of the Invention]

The purpose and effect of the present invention will become clearer through the following detailed description but the purpose and effect of the present invention are not limited only by the following description. Further, in the description of the present invention, when it is determined that the detailed description of widely known technologies related to the present invention may make the subject matter of the present invention unnecessarily unclear, the detailed description will be omitted.

Hereinafter, embodiments of the present invention will be described in detail with reference to the accompanying drawings so that those skilled in the art to which the present invention pertains may easily implement the present invention. However, the present invention may be implemented in various different forms and is not limited to the embodiments described herein. Further, in order to clearly disclose the present invention in the drawings, parts irrelevant to the present invention will be omitted, and in the drawings, the same or similar reference numerals indicate the same or similar components.

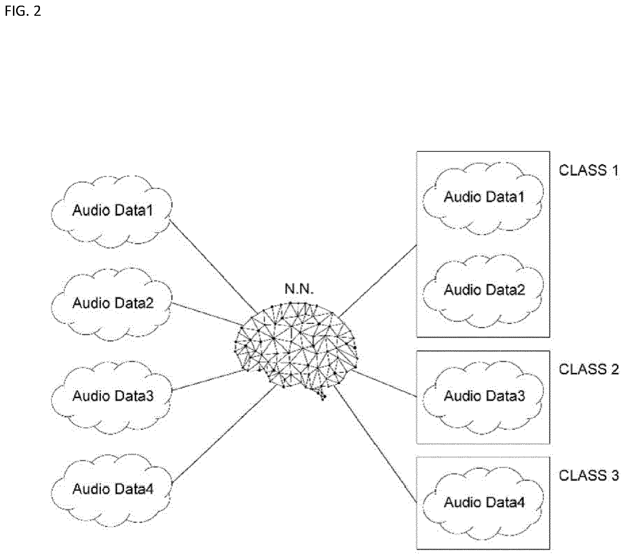

The term "one end" described below refers to a leftward direction of FIG. 2, and the term "the other end" refers to a rightward direction of FIG. 2, which is opposite to the "one end."

The above-described exemplary embodiments of the present invention have been disclosed for purposes of illustration, those skilled in the art to which the present invention pertains can deduce various modifications, changes, and additions without departing from the spirit and scope of the present invention, and it should be understood that such modifications, changes, and additions belong to the scope of the appended claims. Further, since those skilled in the art to which the present invention pertains can deduce various substitutions, modifications, and changes without departing from the technical spirit of the present invention, the present invention is not limited by the above-described embodiments and the accompanying drawings.

In the above-described exemplary system, methods are described on the basis of a flowchart as a series of operations or blocks, but the present invention is not limited to the order of operations, and some operations may be performed in a different order from or concurrently with other operations described above. Further, those skilled in the art may understand that operations illustrated in the flowchart are not exclusive and other operations may be included or one or more operations of the flowchart may be deleted without affecting the scope of the present invention.

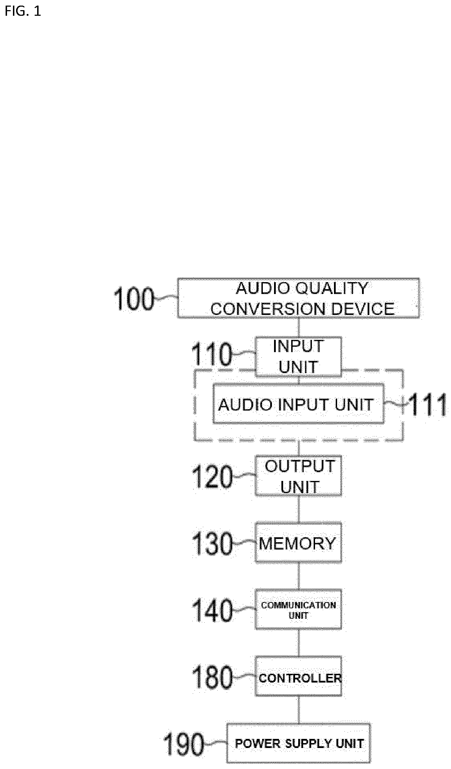

Components of an audio quality conversion device according to the present invention are described In FIG. 1.

As illustrated in FIG. 1, the audio quality conversion device 100 may include an input unit 110, an output unit 120, a memory 130, a communication unit 140, a controller 180, and a power supply unit 190.

In more detail, among the components, the communication unit 140 may include one or more modules capable of wireless communication between the audio quality conversion device 100 and a wireless communication system, between the audio quality conversion device 100 and another audio quality conversion device 100, or between the audio quality conversion device 100 and an external server. Further, the communication unit 140 may include one or more modules that connect the audio quality conversion device 100 to one or more networks.

The input unit 110 may include a camera or image input unit for inputting an image signal, a microphone or audio input unit 111 for inputting an audio signal, and a user input unit (e.g., a touch key, a mechanical key or the like) for receiving information from a user. Voice data or image data collected by the input unit 110 may be analyzed and processed as a control command of the user.

The output unit 120 is intended to generate output related to a visual sense, an auditory sense, and a tactile sense and may include at least one of a display unit, an audio output unit, a haptic module, and an optical output unit. The display unit forms a mutual layer structure with a touch sensor or integrated with the touch sensor, and thus a touch screen can be implemented. The touch screen may function as a user input device that provides an input interface between the audio quality conversion device 100 and the user, and at the same time, may provide an output interface between the audio quality conversion device 100 and the user.

The memory 130 stores data that supports various functions of the audio quality conversion device 100. The memory 130 may store a plurality application programs (application programs or applications) running on the audio quality conversion device 100, data for operating the audio quality conversion device 100, and commands. At least some of the application programs may be downloaded from the external server through the wireless communication. Further, at least some of the application programs may be present on the audio quality conversion device 100 from a time of shipment for the purpose of basic functions (e.g., a call incoming function, a call outgoing function, a message receiving function, and a message sending function) of the audio quality conversion device 100. Meanwhile, the application program may be stored in the memory 130, may be installed on the audio quality conversion device 100, and may be driven by the controller 180 to perform an operation (or function) of an electronic device controller.

The controller 180 generally controls an overall operation of the audio quality conversion device 100 in addition to operations related to the application program. The controller 180 may process a signal, data, information, and the like that are input or output through the above-described components or may provide or process appropriate information or a function to the user by running the application program stored in the memory 130.

Further, the controller 180 may control at least some of the components illustrated in FIG. 1 to run the application program stored in memory 130. Furthermore, the controller 180 may operate at least two of the components included in the audio quality conversion device 100 in combination with each other in order to run the application program.

The power supply unit 190 receives external power or internal power under control of the controller 180 and supplies power to the components included in the audio quality conversion device 100. The power supply unit 190 includes a battery, and the battery may be a built-in battery or a replaceable battery.

At least some of the components may operate in cooperation with each other to implement an operation, control, or a control method for the electronic device controller according to various embodiments, which will be described below. Further, the operation, the control, or the control method for the electronic device controller may be implemented on the electronic device controller by running at least one application program stored in the memory 130.

In an example, the audio quality conversion device 100 may be implemented in the form of a separate terminal. That is, the audio quality conversion device 100 may be a terminal such as a desktop computer or a digital television (TV) or may be implemented in the form of the portable terminal such as a mobile phone, a laptop computer, a personal digital assistant (PDA), a tablet personal computer (PC), or a wearable device.

Hereinafter, training data used for training an artificial neural network mounted on the audio quality conversion device 100 according to the present invention will be described.

Hereinafter, the term "audio data" may be defined as already recorded training data and may have a plurality of tags.

For example, the tags may include environmental data related to a recording environment. In detail, the environmental data may include information related to a distance between the microphone and a sound source, noise at a recording location, and spatial reverberation at the recording location.

A distance tag indicating the distance between the microphone and the sound source may have a specific number or may be classified as a short distance, a middle distance, or a long distance.

A noise tag indicating the noise at the recording location may be defined as a signal-to-noise ratio (SNR).

A spatial reverberation tag indicating the spatial reverberation of the recording location may be defined as a reverberation time (RT) 60 dB. In this case, the RT 60 dB means a time for which a measured sound pressure level is decreased by 60 dB after the sound source is turned off.

A method of acquiring the training data having the above tags will be described below.

In an example, a training data set may include first audio data acquired by a recording device having a predetermined specification in a location in which a noise level is smaller than or equal to a preset reference value and second audio data obtained by adding noise data to the first audio data. In this case, there is an advantage in that the training data set may be acquired with only one recording device.

In another example, the training data set may be acquired by different recording devices. In this case, there is an advantage in that accuracy of the audio data included in the training data set is improved.

In this case, the recording device may be substantially the same device as the audio quality conversion device 100.

Meanwhile, whenever the training data set is acquired, the recording device may allocate the distance tag, the noise tag, and the spatial reverberation tag corresponding to the acquired training data set.

In an example, the recording device may generate the distance tag using an image related to the sound source captured by a camera included in the recording device.

In another example, the distance tag may be set to a default value. In this case, the recording device may control a display included in the recording device to output information related to a recording distance in order to guide an appropriate distance value between the sound source and the microphone when the training data is collected.

The artificial neural network according to the present invention may perform learning using the audio data having the plurality of tags as described above.

In an embodiment, the controller 180 may be equipped with the artificial neural network that performs learning using a plurality of pieces of audio data recorded in different recording environments for a predetermined audio event and environmental data related to the recording environments corresponding to the audio data.

In this case, the environmental data may include at least one of the distance tag, the noise tag, and the spatial reverberation tag described above. That is, the environmental data may correspond to a parameter of the training data set applied to the artificial neural network.

For example, the artificial neural network may perform learning using the training data set including the first audio data corresponding to first environmental data and the second audio data corresponding to second environmental data.

Meanwhile, the first audio data and the second audio data may be obtained by recording substantially the same audio event. That is, the artificial neural network may perform learning using results of recording the same audio event in different recording environments in order to analyze differences in audio characteristics that occur when the same audio event is recorded in different recording environments.

In another embodiment, a method of generating the second audio data by adding separate noise to the first audio data may be considered in order to reduce costs consumed for the learning. The second environmental data may be set based on information on the added noise. In this case, it is preferable that the added noise be diversified to improve learning performance of the artificial neural network.

That is, the artificial neural network may perform learning using the first audio data obtained through recording under an environmental condition in which the noise level is smaller than or equal to a preset value and the second audio data obtained by synthesizing the first audio data with the pre-stored noise data.

Further, a first noise tag corresponding to the first audio data and a second noise tag corresponding to the second audio data may be set to have different values.

In another embodiment, a first distance tag corresponding to the first audio data and a second distance tag corresponding to the second audio data may be set to have different values. One training data set may include the first audio data and the second audio data obtained by recording the same audio event at positions spaced different distances from the sound source.

Likewise, a first spatial reverberation tag corresponding to the first audio data and a second spatial reverberation tag corresponding to the second audio data may be set to have different values. One training data set may include the first audio data and the second audio data obtained by recording the same audio event in spaces having different spatial reverberation values.

In addition, the audio input unit 111 may receive a sound from an external source and generate audio recording data.

In this case, the audio recording data is defined as a different concept from the above-described audio data in that the audio recording data is data newly acquired without separate labeling or corresponding allocated tags.

Further, the controller 180 may convert the audio recording data generated by the audio input unit 111 on the basis of the learning results of the artificial neural network.

As described above, the artificial neural network performs learning using the training data set including the first audio data and the second audio data obtained by recording one audio event in different recording environments.

In addition, when newly recorded audio recording data is arbitrarily input, the controller 180 may convert sound quality characteristics of the input audio recording data using a pre-learned artificial neural network.

In an embodiment, the input unit 110 may include a conversion condition input unit (not illustrated) that receives information related to the conversion of the audio recording data.

In detail, the controller 180 can convert the audio recording data using the artificial neural network based on the information input to the conversion condition input unit.

In this case, the information input to the conversion condition input unit may include variables related to the environmental data. That is, the information input to the conversion condition input unit may include at least one of the distance tag, the noise tag, and the spatial reverberation tag.

For example, when the information input to the conversion condition input unit includes a third distance tag, the controller 180 may convert newly recorded audio recording data into sound quality characteristics corresponding to the third distance tag using the pre-learned artificial neural network.

In another example, when the information input to the conversion condition input unit includes a third noise tag, the controller 180 may convert newly recorded audio recording data into sound quality characteristics corresponding to the third noise tag using the pre-learned artificial neural network.

In still another example, when the information input to the conversion condition input unit includes a third spatial reverberation tag, the controller 180 may convert newly recorded audio recording data into sound quality characteristics corresponding to the third spatial reverberation tag using the pre-learned artificial neural network.

Meanwhile, when the environmental data corresponding to the newly recorded audio recording data can be identified, the controller 180 may convert the sound quality characteristics of the audio recording data in consideration of the identified environmental data together with the information input to the conversion condition input unit.

For example, when the identified environmental data includes the first noise tag and the information input to the conversion condition unit includes the third noise tag, the controller 180 may set an input variable of the artificial neural network to the first noise tag and set an output variable thereof to the third noise tag, thereby converting the audio recording data into sound quality characteristics corresponding to the third noise tag.

That is, the conversion condition input unit may receive information related to a standard for changing the audio recording data.

In this way, when the learned artificial neural network is used, the audio recording data recorded in a first recording environment may be converted as if the audio recording data were recorded in a second recording environment. That is, the audio conversion device using the artificial neural network that has been trained using the audio data including the tags may convert the sound quality characteristics of the audio recording data as if the audio recording data were recorded in a recording environment desired by the user, regardless of an actual recording environment of the audio recording data.

In detail, the environmental data may include at least one of information related to a distance between a location in which the audio event occurs and a microphone that records the audio data, information related to spatial reverberation in a location in which the microphone is present, and information related to noise in a location in which the microphone is present. These may correspond to the distance tag, the noise tag, and the spatial reverberation tag, respectively.

In an example, the controller 180 may determine information related to the noise included in the environmental data by calculating a signal to noise ratio (SNR) of the audio data.

In another example, the camera of the audio conversion device may photograph the location in which the audio event occurs. In this case, the controller 180 may calculate the distance between the location in which the audio event occurs and the microphone using an image generated by the camera.

In another example, the controller 180 may determine information related to the spatial reverberation included in the environmental data by measuring the reverberation time of the audio data.

In addition, the above-described artificial neural network may perform learning using information related to a difference between the first audio data corresponding to the first environmental data and the second audio data corresponding to the second environmental data.

In another example, the artificial neural network may perform learning using environmental data corresponding to a first training data set and environmental data corresponding to a second training data set.

Meanwhile, the audio input unit 111 may include a first microphone and a second microphone spaced a predetermined distance from each other and installed on a body of the audio quality conversion device. In this case, the artificial neural network may perform learning using the first audio data acquired from the first microphone and the second audio data acquired from the second microphone. In this way, when the plurality of microphones are installed at spaced locations, and when an audio event is recorded, the audio data having different distance tag values may be obtained.

Hereinafter, a microphone performance tag is defined as a new type of tag included in the above-described environmental data. The microphone performance tag may include information related to a function of the microphone that records the audio data.

In an embodiment, the audio input unit may include the first microphone and the second microphone having different recording performances. In this case, the artificial neural network may perform learning using the first audio data obtained from the first microphone and the second audio data obtained from the second microphone.

As described above, the conversion condition input unit may receive information related to the microphone performance tag.

In addition, the controller 180 may be equipped with the artificial neural network that performs learning using a plurality of pieces of audio data obtained by recording a predetermined audio event by microphones having different performances and the microphone performance tag related to the performances of the microphones corresponding to the audio data.

Further, the controller 180 may convert the audio recording data generated by the audio input unit using the artificial neural network that is learned as described above.

That is, the controller 180 may convert the audio recording data obtained by the first microphone using the artificial neural network such that the audio recording data has sound quality characteristics corresponding to that obtained by the second microphone.

In detail, the artificial neural network may perform learning using information related to a difference between the first audio data recorded by the first microphone and the second audio data recorded by the second microphone.

Meanwhile, it is preferable that the above-described performances of the first microphone and the second microphone be set to be significantly different from each other.

In another embodiment, the above-described artificial neural network may perform learning using information related to a difference between the sound quality characteristics of the first audio data obtained by recording one audio event by the first microphone and the sound quality characteristics of the second audio data obtained by recording the audio event by the second microphone having a different performance from that of the first microphone.

In another embodiment, the above-described artificial neural network may perform leaning using information related to a difference between sound qualities of the first audio data and the second audio data that are obtained by recording the audio event in different recording environments and are identified as the same label, the first environment data corresponding to the first audio data, and the second environment data corresponding to the second audio data.

Examples of the label may include a "baby sound" or a "siren sound," and the label may be preset by the user.

In another embodiment, the above-described artificial neural network may perform learning using information related to at least one of the label of the audio event, the sound quality characteristics of the audio data obtained by recording the audio event, performance characteristics of the microphone that acquires the audio data, and the recording environment of the audio data.

Meanwhile, the controller 180 may be equipped with a pre-learned artificial intelligence engine to identify the label corresponding to the audio data. That is, the controller 180 may identify the label of the audio recording data generated by the audio input unit using the artificial intelligence engine.

## Claims

1. An audio quality conversion device comprising:
a controller equipped with an artificial neural network that performs learning using a plurality of pieces of audio data obtained by recording a predetermined audio event in different recording environments and environmental data related to the recording environments corresponding to the audio data; and
an audio input unit configured to receive external sound and generate audio recording data,
wherein the controller converts the audio recording data generated by the audio input unit on the basis of a result of the learning by the artificial neural network.

2. The audio quality conversion device of claim 1, further comprising a conversion condition input unit configured to receive information related to the conversion of the audio recording data,
wherein the controller converts the audio recording data using the artificial neural network on the basis of the information input to the conversion condition input unit.

3. The audio quality conversion device of claim 1, wherein the environmental data includes at least one of information related to a distance between a location in which the audio event occurs and a microphone configured to record the audio data, information related to spatial reverberation in a location in which the microphone is present, and information related to noise in a location in which the microphone is present.

4. The audio quality conversion device of claim 3, wherein the artificial neural network performs learning using first audio data obtained through recording under an environmental condition in which a noise level is smaller than or equal to a preset value and second audio data obtained by synthesizing the first audio data with pre-stored noise data.

5. The audio quality conversion device of claim 4, wherein the artificial neural network performs learning using environmental data corresponding to first training data and environmental data corresponding to second training data.

6. The audio quality conversion device of claim 3, wherein the audio input unit includes a first microphone and a second microphone spaced a predetermined distance from each other and installed on a body of the audio quality conversion device, and
the artificial neural network performs learning using audio data acquired from the first microphone and audio data acquired from the second microphone.
